(19) **Europäisches Patentamt / European Patent Office / Office européen des brevets**

(11) **EP 3 007 429 B1**

(12) **FASCICULE DE BREVET EUROPEEN**

(45) Date de publication et mention
de la délivrance du brevet:
**28.12.2016 Bulletin 2016/52**

(51) Int Cl.:
***H04N 5/232*** *(2006.01)*

(21) Numéro de dépôt: **15187543.2**

(22) Date de dépôt: **30.09.2015**

(54) **APPAREIL MOBILE, NOTAMMENT DRONE À VOILURE TOURNANTE, MUNI D'UNE CAMÉRA VIDEO DÉLIVRANT DES SÉQUENCES D'IMAGES CORRIGÉES DYNAMIQUEMENT DE L'EFFET WOBBLE**

MOBILES GERÄT, INSBESONDERE DREHFLÜGELDRONE, DIE MIT EINEM VIDEOGERÄT AUSGESTATTET IST, DAS DYNAMISCH KORRIGIERTE BILDSEQUENZEN DES WOBBLE-EFFEKTS LIEFERT

MOBILE APPARATUS, IN PARTICULAR A ROTARY-WING DRONE, PROVIDED WITH A VIDEO CAMERA SUPPLYING IMAGE SEQUENCES WITH DYNAMIC CORRECTION OF THE WOBBLE EFFECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2014 FR 1459720**

(43) Date de publication de la demande:
**13.04.2016 Bulletin 2016/15**

(73) Titulaire: **Parrot Drones**
**75010 Paris (FR)**

(72) Inventeurs:
• **ELINE, Pierre**
**95400 Arnouville Les Gonesse (FR)**

• **SRON, Eng Hong**
**75010 PARIS (FR)**

(74) Mandataire: **Dupuis-Latour, Dominique et al**
**Bardehle Pagenberg**
**10, boulevard Haussmann**
**75009 Paris (FR)**

(56) Documents cités:
**US-A1- 2004 056 963     US-A1- 2008 030 587**
**US-A1- 2011 129 166     US-A1- 2012 242 847**
**US-A1- 2013 044 230**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le traitement des images numériques captées par une caméra embarquée dans un appareil mobile, en particulier un engin volant motorisé tel qu'un drone.

L'invention s'applique avantageusement aux images recueillies par la caméra frontale d'un drone à voilure tournante tel qu'un quadricoptère. Un exemple typique d'un tel drone est le *AR.Drone 2.0* de Parrot SA, Paris, France, qui est un quadricoptère équipé d'une série de capteurs (accéléromètres, gyromètres 3 axes, altimètre), d'une caméra frontale captant une image de la scène vers laquelle est dirigé le drone, et d'une caméra de visée verticale captant une image du terrain survolé. Le drone est pourvu de rotors multiples entrainés par des moteurs respectifs commandables de manière différenciée afin de piloter le drone en attitude et en vitesse.

Divers aspects de ce drone sont décrits dans les WO 2010/061099 A2, EP 2 364 757 A1 ou EP 2 613 214 A1 (Parrot SA).

La caméra vidéo frontale est utilisable pour un pilotage "en mode immersif", c'est-à-dire où l'utilisateur se sert de l'image de la caméra de la même façon que s'il se trouvait lui-même à bord du drone.

Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Ces images étant destinées à être enregistrées et communiquées, il est souhaitable qu'elles présentent le moins de défauts possible, notamment de défauts provoqués par le comportement du drone, qui peut engendrer des oscillations, déformations et autres artefacts intempestifs de l'image captée par la caméra.

Ces défauts peuvent être acceptables dans une configuration de "pilotage immersif". En revanche, s'il s'agit d'utiliser le drone à la manière d'une caméra vidéo mobile pour capter des séquences qui seront enregistrées et restituées ultérieurement, ces défauts sont extrêmement gênants, de sorte qu'il est souhaitable de les réduire à un minimum.

L'invention vise tout particulièrement l'élimination du défaut connu sous le nom de *wobble,* qui est un effet de flou et de déformation de l'image. Cet effet apparait en présence de vibrations de haute fréquence et de faible amplitude, typiquement les vibrations des moteurs, transmises au support de la caméra, qui ont pour résultat de déformer les lignes droites avec apparition d'ondulations et formation de vagues à l'image. Cet effet, même s'il n'est pas très accentué, est très vite perceptible à l'oeil, de sorte qu'il dégrade très rapidement la qualité visuelle de l'image.

Cet artefact particulier est dû au mécanisme de type *rolling shutter* (et non pas *global shutter*) utilisé par les capteurs des caméras telles que celles qui sont embarquées sur les drones, où les lignes constituant l'image ne sont pas acquises en même temps pour tous les pixels de l'image, mais les unes après les autres. Les vibrations se produisant pendant la capture d'une image génèrent de ce fait au sein de l'image des déformations qui ne sont pas les mêmes d'une ligne à la suivante, d'où l'apparition des ondulations.

La correction ligne par ligne (correction "intra-image") de l'effet *wobble* peut être réalisée en utilisant les mesures des gyromètres, qui délivrent un signal représentatif des rotations instantanées du drone et donc de la caméra dans les trois axes, y compris les variations rapides dues aux vibrations. L'application d'une transformée inverse de la mesure gyrométrique permet de compenser dans une certaine mesure l'effet *wobble,* dès lors que l'attitude du drone peut être acquise de façon précise pour chacune des lignes, et en synchronisme avec le capteur de la caméra.

Une technique de ce type est notamment décrite dans la demande FR 14 56302 du 2 juillet 2014 pour *"Drone à voilure tournante muni d'une caméra vidéo délivrant des séquences d'images stabilisées",* au nom de la Demanderesse.

Le US 2012/0242847 A1 décrit une technique de même nature, appliquée à une caméra video à obturateur *rolling shutter,* pour la correction des déformations produites sous l'effet des mouvements ou tremblements de l'utilisateur tenant la caméra à bout de bras. La caméra étant pourvue de capteurs gyrométriques, il est possible d'évaluer les rotations instantanées du capteur et de compenser ces mouvements, en temps réel, par un traitement électronique approprié des signaux d'image délivrés par le capteur.

Cela étant, comme on l'expliquera plus précisément dans la description détaillée ci-après, cette méthode de compensation du *wobble* par utilisation du signal gyrométrique est susceptible de produire dans certaines conditions des sur-corrections générant de nouveaux artefacts, avec pour conséquence que l'image corrigée se trouve, paradoxalement, plus dégradée que l'image brute obtenue avant toute correction.

Le point de départ de l'invention est la constatation que ce phénomène est lié au temps d'exposition de la caméra, et ne se produit qu'avec des temps d'exposition longs, correspondant à des scènes sombres.

En effet, lorsque le temps d'exposition est proche de la période de vibration subie par la caméra (c'est-à-dire la vibration qui génère le *wobble* que l'on cherche à réduire), le *wobble* est naturellement filtré par le long temps d'exposition de la caméra. L'image brute présente alors un flou de bougé mais peu ou pas d'ondulations. Mais si l'on applique une correction inverse issue du signal gyrométrique - qui reflète l'effet de la vibration sur la caméra mais ne prend pas en compte l'effet de filtrage par le long temps d'exposition -, alors cette correction inverse fait apparaitre sur l'image, en plus du léger flou de bougé, une ondulation qui n'existait pas sur l'image brute.

Le principe de base de l'invention consiste à insérer un filtre dans la chaine de stabilisation de l'image, entre le circuit délivrant le signal gyrométrique et le circuit de correction des distorsions, de sorte que le signal gyrométrique, reflétant les rotations instantanées de la caméra dues aux vibrations, soit filtré avec une fonction de transfert dépendant du temps d'exposition de la caméra pour l'image courante. Pour chaque image un filtre sera généré avec une fréquence de coupure variant de façon inverse du temps d'exposition, de manière à progressivement supprimer du signal de correction (signal gyrométrique) les mouvements de la caméra naturellement filtrés du fait du temps d'exposition croissant, et ne pas introduire ainsi de fausses corrections dégradant le résultat.

Plus précisément, l'invention propose un appareil mobile, notamment un engin volant motorisé tel qu'un drone, comprenant de manière en elle-même connue, notamment d'après le US 2012/0242847 A1 précité, une caméra comprenant un objectif, un capteur numérique sur lequel est formée une image d'une scène pendant un temps d'exposition donné, et un mécanisme de lecture du capteur de type *rolling shutter* délivrant en sortie ligne par ligne des données video, ainsi qu'un circuit de contrôle d'exposition, comprenant un asservissement propre à ajuster de manière dynamique le temps d'exposition en fonction du niveau d'éclairement de la scène captée. Une centrale gyrométrique délivre un signal gyrométrique représentatif des variations instantanées de l'attitude de l'appareil mobile. Un circuit de traitement d'image, comprenant un filtre anti-*wobble,* reçoit en entrée les données video et le signal gyrométrique et délivre en sortie des données video traitées et corrigées d'artefacts introduits par des vibrations propres à l'appareil mobile.

De façon caractéristique de l'invention, le filtre anti-*wobble* modifie dynamiquement le gain du signal gyrométrique appliqué en entrée du circuit de traitement d'image en fonction du temps d'exposition déterminé par le circuit de contrôle d'exposition, de manière à réduire le gain du filtre lorsque le temps d'exposition augmente, et *vice versa.*

Selon diverses caractéristiques subsidiaires avantageuses :

- la loi de variation de gain du filtre est une loi de variation monotone, qui peut être bornée entre un gain maximal unité et un gain minimal nul ;
- le filtre anti-*wobble* est un filtre numérique apte à générer, pour une image donnée, un filtre de Butterworth passe-bas dont l'ordre est prédéfini et dont la fréquence de coupure varie en fonction du temps d'exposition déterminé pour ladite image donnée ;
- la loi de variation de la fréquence de coupure $F_c$ du filtre de Butterworth en fonction du temps d'exposition $t_{exp}$ est une loi du type $F_c = 1/2.t_{exp}$ ;
- le filtre numérique est appliqué au signal gyrométrique deux fois, dans le sens direct et dans le sens retour ;
- la caméra délivre en sortie les données video pendant la durée d'une fenêtre d'acquisition, et le filtre anti-*wobble* est appliqué pour une image donnée pendant la durée d'une fenêtre de traitement débutant avant la fenêtre d'acquisition de cette image, et se terminant après la fenêtre d'acquisition de l'image.

On va maintenant décrire un exemple de mise en oeuvre de l'invention, en référence aux dessins annexés où les mêmes références désignent d'une figure à l'autre des éléments identiques ou fonctionnellement semblables.

Les Figures 1 a à 1 c illustrent les artefacts de type *jelly* et *wobble* observables sur l'image d'un damier, avant application de tout filtrage correctif.

Les Figures 2a à 2d illustrent les images d'une barre verticale à fort contraste, obtenues par application de diverses techniques de correction des distorsions, avec un temps d'exposition court.

Les Figures 3a à 3d illustrent les mêmes images respectives que celles des Figures 2a à 2d, mais avec un temps d'exposition long, proche de la période des vibrations subies par la caméra.

La Figure 4 illustre, sous forme de schéma par blocs, les différents éléments de correction et de filtrage des artefacts de type *wobble,* selon l'invention.

La Figure 5 illustre la caractéristique gain/temps d'exposition optimisée pour la fréquence de vibration caractéristique subie par la caméra, telle que relevée expérimentalement et approximée par une fonction mathématique permettant de modéliser cette caractéristique optimale.

La Figure 6 est un chronogramme montrant l'action du filtre dynamique de l'invention, dans le cas d'une image capturée avec un temps d'exposition court.

La Figure 7 est homologue de la Figure 6, pour un temps d'exposition long.

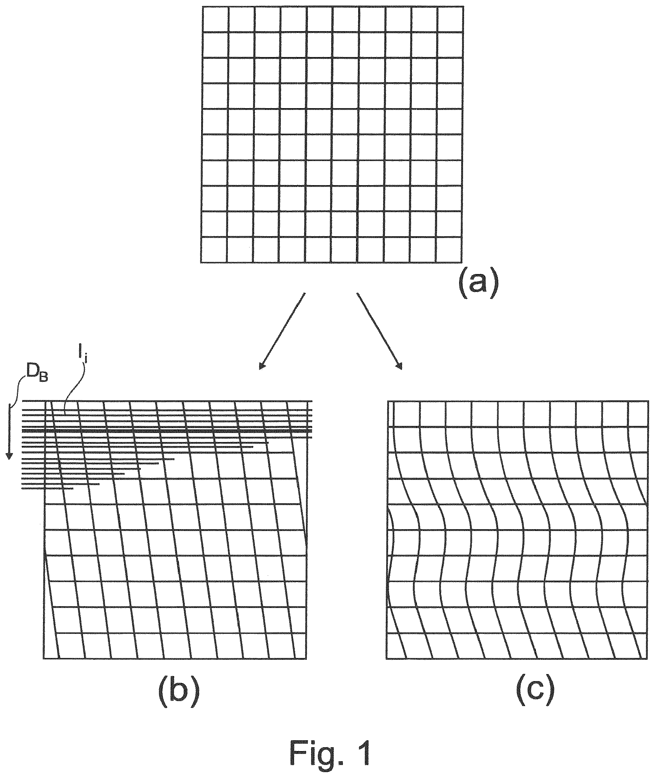

Sur la Figure 1 on a illustré les déformations dénommées *jelly* et *wobble* observables sur l'image d'un damier représenté Figure 1 a.

Ces artefacts sont propres à un capteur de type *rolling shutter* (et non pas *global shutter*), où les lignes constituant l'image ne sont pas acquises en même temps pour tous les pixels de l'image, mais successivement ligne après ligne (ou groupe de lignes après groupe de lignes), au fur et à mesure du balayage du capteur dans la direction $D_B$, perpendiculairement aux lignes $\ell_i$. Les mouvements du drone et les vibrations se produisant pendant la capture d'une image génèrent de ce fait ailleurs au sein de l'image des déformations qui ne seront pas les mêmes d'une ligne à la suivante.

L'effet *jelly,* visible Figure 1b, apparaît en présence de mouvements de la caméra de forte amplitude mais de relativement basse fréquence, par exemple en présence de rotations importantes du drone : lorsque celui-ci tourne, entre le début et la fin de l'exploration du capteur par l'obturateur *rolling shutter,* l'image se sera déplacée de plusieurs pixels (dans l'exemple de la Figure 1b, d'environ un carreau du damier entre le haut et le bas de l'image). Ce phénomène peut être pallié en adaptant à chaque ligne $\ell$i de l'image un décalage approprié au fur et à mesure du balayage $D_B$ du capteur, cette correction ligne par ligne permettant d'annuler l'artefact *jelly* introduit par la rotation rapide du drone.

La Figure 1c illustre l'autre type d'artefact, dit "effet *wobble*", qui est celui concerné par la présente invention.

À la différence de l'effet *jelly* qui est un effet de basse fréquence et de grande amplitude causé par les rotations du drone pour se déplacer, l'effet *wobble* est principalement causé par les vibrations du moteur, qui introduisent des oscillations de haute fréquence (typiquement de l'ordre de 120 Hz) et de faible amplitude.

L'effet *wobble* est partiellement corrigé par un amortissement mécanique approprié du support de la caméra permettant de filtrer les vibrations du moteur, comme décrit par exemple dans le WO 2011/058255 A1 (Parrot SA).

Ce filtrage mécanique n'est, en pratique, pas suffisant et les résidus de l'effet *wobble* doivent être éliminés, ce qui peut être réalisé en utilisant des mesures délivrées par la centrale inertielle du drone, représentatives des rotations instantanées du drone provoquées par les vibrations, et en appliquant les corrections ligne par ligne.

Les gyromètres de la centrale inertielle permettent en effet de disposer d'une indication de l'attitude précise du drone pour chacune des lignes, autorisant ainsi une correction "intra-image" ligne par ligne de manière à recaler les lignes successives les unes par rapport aux autres afin de reproduire une image la plus proche possible de la scène captée, à savoir le damier de la Figure 1a dans le présent exemple.

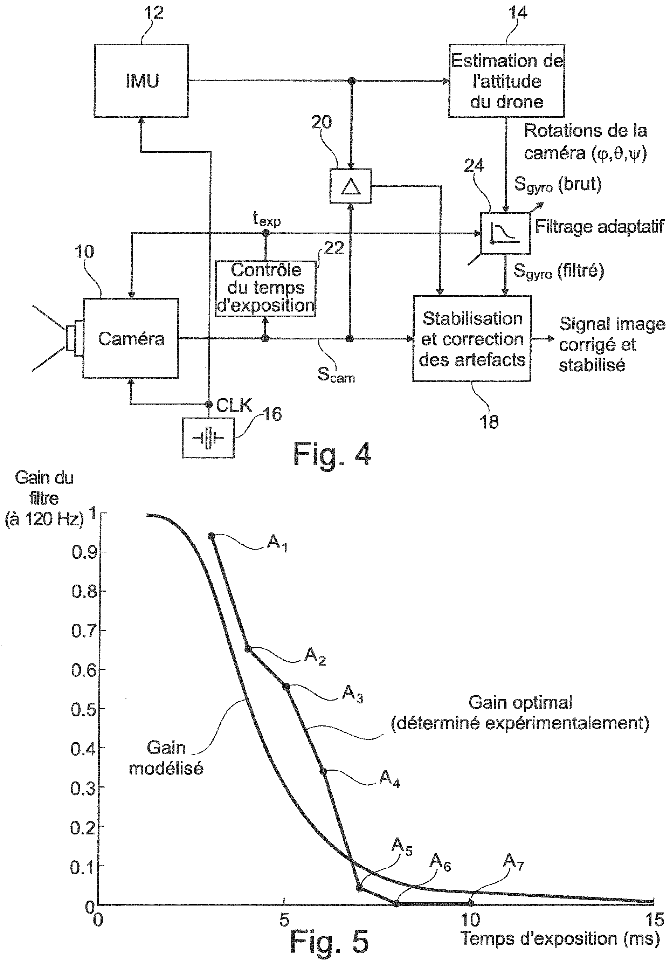

La demande française précitée 14 56302 du 2 juillet 2014 décrit une telle technique de correction des effets jelly et *wobble* utilisant les signaux délivrés par les gyromètres de la centrale inertielle du drone, technique qui sera décrite plus loin en référence à la Figure 4.

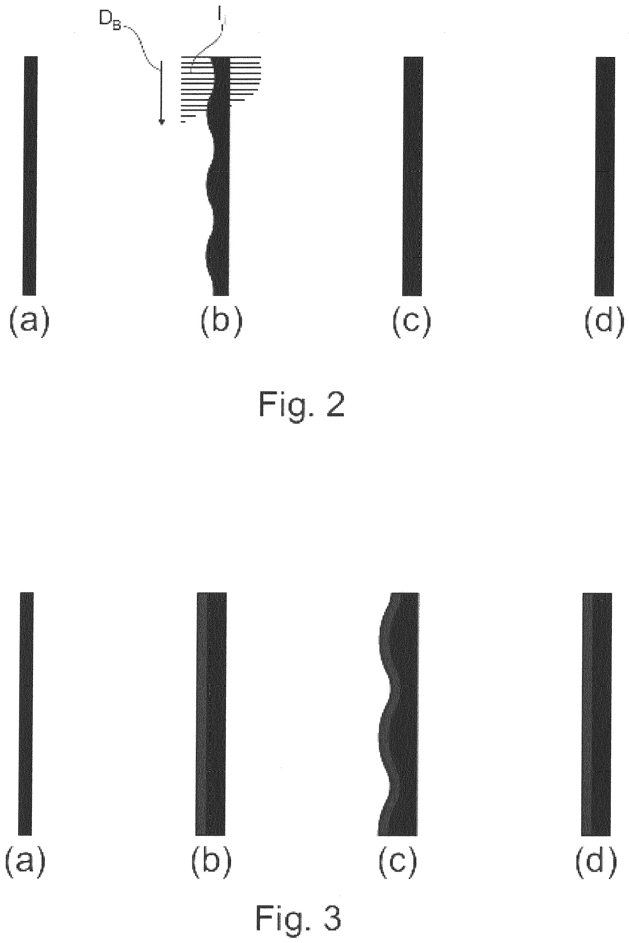

Cette technique n'est cependant pas dépourvue d'inconvénients dans certaines circonstances, comme on va maintenant l'expliquer en référence aux Figures 2 et 3.

Sur la Figure 2, on a simulé une scène de fort contraste présentant une ligne droite, avec :

- Figure 2a, la scène originelle, c'est-à-dire la représentation réelle servant de référence ;
- Figure 2b, l'image obtenue sur un capteur de type *rolling shutter* d'une caméra filmant la scène de la Figure 2a, et sujette à une vibration importante : la ligne droite initiale apparait gondolée du fait que les lignes $\ell_i$ ne sont pas acquises simultanément, mais balayées successivement suivant la direction $D_B$, selon la technique caractéristique d'une caméra *rolling shutter* ;

- Figure 2c, l'image de la Figure 2b après correction par application du mouvement inverse de la vibration, tel que mesuré par des gyromètres solidaires de la caméra : comme on peut le constater, l'ondulation a disparu, au prix seulement d'un léger épaississement du trait, qui visuellement n'est pas gênant pour la perception de l'image ;
- Figure 2d, l'image de la scène de la Figure 2a qui aurait été obtenue sur un capteur de type *global shutter* d'une caméra filmant la scène de la Figure 2a : les lignes du capteur y sont lues en bloc, simultanément, donc ne sont pas sujettes au phénomène de *wobble.* Ce type d'image constitue l'idéal dont on cherchera à se rapprocher.

Les représentations de la Figure 2 ont été réalisées avec un temps d'exposition très court, de l'ordre de 1 ms, correspondant à des conditions de prise de vue typiques de celles que l'on peut rencontrer en extérieur par temps ensoleillé.

La Figure 3 illustre les résultats que l'on obtiendrait avec un temps d'exposition plus long, par exemple de 8 ms, proche de la période de la vibration subie par la caméra (soit 8,33 ms pour une vibration à 120 Hz).

On constate sur la Figure 3b que le *wobble* a été naturellement filtré par la caméra : l'ondulation a disparu et l'artefact ne se manifeste plus que sous la forme d'un flou progressif, qui n'est pas trop gênant visuellement. Ce résultat est d'ailleurs tout à fait comparable, comme illustré Figure 3d, à ce que l'on aurait obtenu avec un capteur de type *global shutter* qui présenterait également un flou de bougé au niveau de la zone de contraste.

En revanche, comme illustré Figure 3c, l'image sur laquelle le mouvement inverse subi par la caméra et mesuré par le gyromètre a été appliqué donne un résultat de mauvaise qualité, très éloigné de l'idéal constitué par l'image de la Figure 3d que l'on aurait avec un capteur *global shutter.* Cet exemple démontre les limites de la correction anti-*wobble* par application d'un signal gyrométrique inverse : les gyromètres mesurent, certes, tous les mouvements subis par la caméra lors du balayage de l'image du capteur mais, selon la fréquence de ces mouvements et le temps d'exposition, ces mouvements sont susceptibles de générer des déformations plus ou moins visibles, qui ont pour conséquence de sur-corriger certains mouvements et générer de nouveaux artefacts. En appliquant une correction, on obtient ainsi, paradoxalement, une image de moins bonne qualité (Figure 3c) que si l'on n'avait appliqué aucune correction (Figure 3b).

Tel est le problème que vise à résoudre la présente invention.

La Figure 4 illustre, sous forme de schéma par blocs, les différents éléments d'un circuit de traitement d'image permettant de corriger l'effet *wobble* sur le signal $S_{cam}$ d'image délivrée par une caméra 10 comprenant un capteur de type *rolling shutter.*

Cette caméra est sujette à des déplacements angulaires, de grande amplitude et de basse fréquence (déplacement du drone) ainsi que de faible amplitude et haute fréquence (vibration des moteurs). Ces mouvements subis par la caméra sont mesurés par une centrale inertielle 12 dont les mesures sont appliquées à un circuit 14 d'estimation de l'attitude du drone délivrant un signal gyrométrique $S_{gyro}$ représentatif des rotations instantanées du drone et donc de la caméra, la centrale inertielle 12 et la caméra 10 étant mécaniquement solidaires. Ces rotations sont données par l'angle de tangage $\phi$, l'angle de roulis $\theta$ et l'angle de lacet $\psi$ décrivant l'inclinaison du drone dans les trois dimensions par rapport à un repère terrestre fixe (angle d'Euler).

Le signal gyrométrique $S_{gyro}$ est appliqué à un circuit 18 de stabilisation et de correction des artefacts du signal d'image $S_{cam}$, pour obtenir en sortie un signal image corrigé et stabilisé qui pourra être ensuite transmis à l'utilisateur pour visualisation sur un écran, enregistrement dans une mémoire numérique, etc.

La caméra 10 et la centrale inertielle 12 sont pilotées par un circuit d'horloge commun 16, les fréquences de fonctionnement respectives de la centrale inertielle et de la caméra étant des sous-multiples de la fréquence CLK de cette horloge 16. En d'autres termes, la caméra 10 et la centrale inertielle 12 sont configurées de sorte que $F_{gyro} = K.F_{cam}$, $F_{gyro}$ étant la fréquence d'acquisition des gyromètres (typiquement, $F_{gyro}$ = 990 Hz), $F_{cam}$ étant la fréquence d'acquisition des images par la caméra vidéo (typiquement, $F_{cam}$ = 30 Hz), et K étant un entier positif (typiquement, K = 33). Le fait que K soit un entier et que l'horloge de base soit la même pour les gyromètres et la caméra assure qu'il y aura toujours K échantillons du signal gyrométrique $S_{gyro}$ par image $S_{cam}$, sans aucune dérive, les mesures d'angle tombant toujours au même instant.

Toutefois, si ce mécanisme assure que le signal $S_{gyro}$ délivré par les capteurs gyrométriques et le signal $S_{cam}$ délivré par la caméra sont synchrones, il ne donne aucune garantie sur la concordance de phase de ces signaux. Pour garantir une synchronisation parfaite, un composant matériel (*hardware*) 20 mesure l'intervalle de temps $\Delta$ entre les signaux gyrométrique $S_{gyro}$ et video $S_{cam}$ avec une grande précision. L'horloge 16 commune et le circuit *hardware* 20 de mesure du déphasage permettent ainsi de relier dans le temps les signaux gyrométriques et video avec une très grande exactitude, à un cycle d'horloge près. On notera qu'une mesure unique est suffisante, puisque les horloges ont été réglées de manière à ce qu'elles ne dérivent pas.

Cette configuration est celle décrite dans la demande FR 14 56302 précitée mais, comme on l'a vu en référence aux Figures 2 et 3, dans le cas de temps d'exposition longs elle ne permet pas d'obtenir une correction satisfaisante du *wobble*, bien au contraire elle introduit de nouveaux artefacts par effet de sur-correction.

Pour cela, la présente invention propose de moduler de façon dynamique l'effet de la correction gyrométrique, en fonction du temps d'exposition de l'image.

Le temps d'exposition $t_{exp}$ est déterminé, image par image, par un circuit 22 de contrôle d'exposition, comprenant un asservissement permettant d'ajuster de manière dynamique le temps d'exposition selon le niveau d'éclairement de la scène captée par la caméra 10. En fonction de ce niveau d'éclairement, déterminé par analyse du signal $S_{cam}$, le circuit 22 pilote la caméra de manière à faire varier le temps d'exposition pour maintenir le niveau d'éclairement dans les meilleures conditions de restitution de l'image par le capteur.

De façon caractéristique, l'invention prévoit d'intercaler entre la centrale inertielle 12 et le circuit de correction numérique de l'image 18 un filtre 24 commandé dynamiquement en fonction du temps d'exposition $t_{exp}$ déterminé par le circuit 22. Ce filtrage est un filtrage adaptatif avec, pour chaque image, génération d'un filtre numérique dont la fréquence de coupure variera dans le sens inverse du temps d'exposition, de manière à atténuer d'autant plus le signal gyrométrique - et donc la correction que celui-ci introduit dans l'image - que le temps d'exposition sera élevé, afin de ne pas introduire de fausse correction dégradant le résultat.

On va maintenant expliquer, en référence à la Figure 5, la manière dont est définie la fonction de transfert de ce filtre.

En premier lieu, on détermine de manière expérimentale, pour différentes expositions, l'atténuation optimale à appliquer sur les données $S_{gyro}$ issues des gyromètres en fonction de la fréquence des hélices (dans un exemple d'implémentation, en point fixe les hélices tournent à 120 Hz, et c'est cette valeur de fréquence qui sera utilisée pour régler les caractéristiques du filtre dynamique).

Pour cela, on fait voler le drone devant une mire, on examine le résultat produit pour différentes valeurs d'atténuation du signal $S_{gyro}$, et on mesure l'amplitude des ondulations de l'image : lorsque cette amplitude est minimale, on considère que l'on a trouvé la valeur de gain optimale $A_i$.

Les différentes valeurs $A_1$, $A_2$ ... $A_7$ relevées pour des temps d'exposition croissants de 3 ms, 4 ms ... 10 ms donnent la courbe de gain optimal représentée Figure 5.

Comme on peut le voir, pour des temps d'exposition inférieurs à 3 ms le gain est égal à l'unité, c'est-à-dire que la totalité du signal $S_{gyro}$ reflétant la vibration des hélices est appliquée au circuit de correction des artefacts 18, sans filtrage. En revanche, pour des temps d'exposition égaux ou supérieurs à 8 ms le signal $S_{gyro}$ est totalement filtré, c'est-à-dire que l'on ne tient pas du tout compte du signal gyrométrique pour corriger les artefacts. Entre les deux, pour un temps d'exposition moyen de 5 ms, le meilleur gain est d'environ 0,5, ce qui signifie qu'il faut atténuer de moitié l'amplitude du signal de correction $S_{gyro}$.

L'étape suivante consiste à modéliser la caractéristique relevée expérimentalement, c'est-à-dire à déterminer la loi de génération du filtre numérique qui sera appliqué à chaque image.

On peut avantageusement choisir un filtre de type Butterworth, pour la qualité de sa réponse en gain qui est aussi constante que possible dans la bande passante.

Pour pallier les problèmes de déphasage, le filtre est appliqué deux fois sur les données gyrométriques $S_{gyro}$, d'abord dans le sens direct puis dans le sens retour. Plus précisément :

- le signal gyrométrique produit une série d'échantillons $e_0, e_1 \dots e_n$ ;
- le filtre est appliqué une première fois à cet échantillon, donnant des valeurs filtrées $F_0, F_1 \dots F_n$ ;
- l'ordre de ces valeurs est inversé, donnant une séquence $F_n \dots F_1, F_0$ ;
- le filtre est appliqué une seconde fois, produisant de nouvelles valeurs filtrées $F'_4 \dots F'_1, F'_0$ ; et
- l'ordre de ces échantillons est inversé pour donner les valeurs $F'_0, F'_1 \dots F'_n$ qui seront finalement utilisées par le circuit de correction des artefacts (signal $S_{gyro}$ filtré).

Ce double filtrage nécessite d'avoir des échantillons du signal gyrométrique brut $S_{gyro}$ avant et après la capture de l'image. Le traitement anti-*wobble* sera donc différé de quelques millisecondes, le temps d'accumuler dans un tampon suffisamment d'échantillons du signal gyrométrique.

La synthèse d'un filtre de Butterworth passe-bas implique deux paramètres d'entrée :

- sa fréquence de coupure, au-delà de laquelle les signaux doivent être atténués, et
- son ordre, qui détermine la largeur de la bande de transition entre la bande passante et la bande coupée, c'est-à-dire le caractère plus ou moins abrupt de cette transition.

En choisissant un ordre 2 et en fixant pour la fréquence de coupure une loi du type :

$$F_c = 1 / 2.t_{exp},$$

$F_c$ étant la fréquence de coupure du filtre de Butterworth et
$t_{exp}$ étant la valeur courante du temps d'exposition,

on obtient la courbe continue du gain modélisé illustrée Figure 5, qui approxime de façon tout à fait convenable la caractéristique relevée expérimentalement.

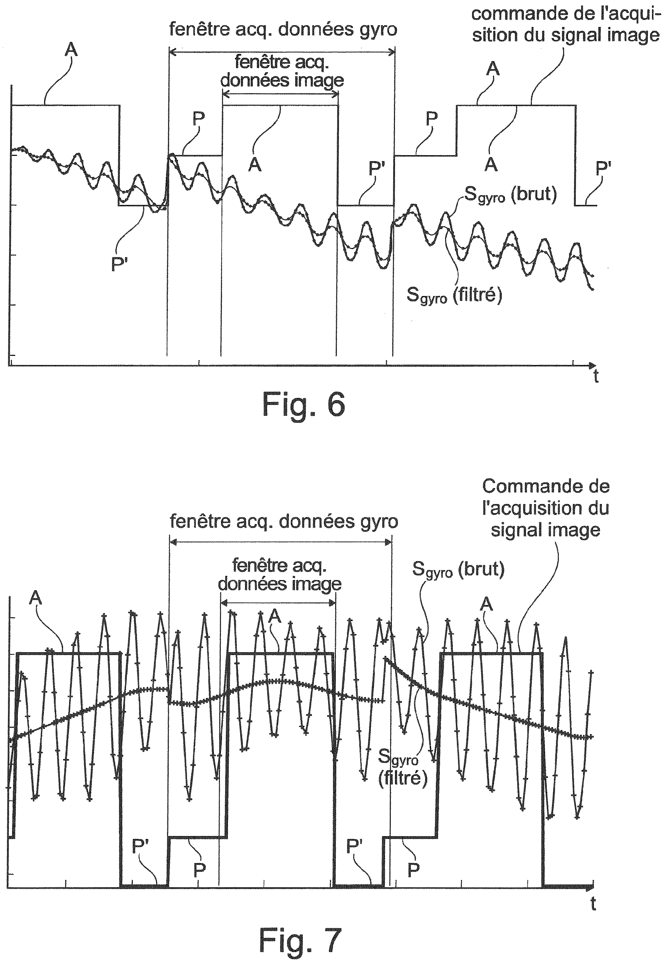

Les Figures 6 et 7 sont des chronogrammes montrant l'action du filtre dynamique de l'invention, dans le cas d'une image capturée respectivement avec un temps d'exposition court et avec un temps d'exposition long.

Sur ces figures, la zone A correspond à la fenêtre d'acquisition de l'image, et la courbe "$S_{gyro}$ (brute)" correspond au signal gyrométrique avant application du filtrage.

Pour opérer la correction selon l'invention, il est nécessaire de recueillir un historique des échantillons du signal gyrométrique sur une fenêtre plus large (échantillons antérieurs P et échantillons postérieurs P') que la fenêtre A correspondant aux seules données de l'image.

La Figure 6 illustre un cas où le temps d'exposition est court, avec le filtre partiellement appliqué de manière à réduire l'effet des vibrations. En comparant les deux courbes "$S_{gyro}$ (brut)" et "$S_{gyro}$ (filtré)", on peut constater que les ondulations à basse fréquence ont été préservées et que celles à haute fréquence sont partiellement atténuées, le tout sans déphasage.

La Figure 7 est homologue de la Figure 6, dans le cas d'un temps d'exposition très long : dans ce cas, la haute fréquence du signal gyrométrique est totalement supprimée par le filtre. En revanche, les variations à basse fréquence sont préservées. Ces variations lentes, représentatives d'un effet *jelly*, pourront être corrigées par une technique conventionnelle de recalage ligne à ligne des lignes successives de l'image.

## Revendications

1. Un appareil mobile, notamment un engin volant motorisé tel qu'un drone, comportant :

    - une caméra (10) comprenant un objectif, un capteur numérique sur lequel est formée une image d'une scène pendant un temps d'exposition ($t_{exp}$) donné, et un mécanisme de lecture du capteur de type *rolling shutter* délivrant en sortie ligne par ligne des données video ($S_{cam}$) ;
    - un circuit de contrôle d'exposition (22), comprenant un asservissement propre à ajuster de manière dynamique le temps d'exposition ($t_{exp}$) en fonction du niveau d'éclairement de la scène captée ;
    - une centrale gyrométrique (12), apte à délivrer un signal gyrométrique ($S_{gyro}$) représentatif des variations instantanées de l'attitude ($\varphi$, $\theta$, $\psi$) de l'appareil mobile ; et
    - un circuit de traitement d'image (18), comprenant un filtre anti-*wobble* (24), recevant en entrée les données video ($S_{cam}$) et le signal gyrométrique ($S_{gyro}$), et délivrant en sortie des données video traitées et corrigées d'artefacts introduits par des vibrations propres à l'appareil mobile,

**caractérisé en ce que** le filtre anti-*wobble* (24) est apte à modifier dynamiquement le gain du signal gyrométrique appliqué en entrée du circuit de traitement d'image en fonction du temps d'exposition ($t_{exp}$) déterminé par le circuit de contrôle d'exposition, de manière à réduire le gain du filtre lorsque le temps d'exposition augmente, et *vice versa*.

2. L'appareil mobile de la revendication 1, dans lequel la loi de variation de gain du filtre est une loi de variation monotone.

3. L'appareil mobile de la revendication 2, dans lequel la loi de variation de gain du filtre est une loi de variation bornée entre un gain maximal unité et un gain minimal nul.

4. L'appareil mobile de la revendication 2, dans lequel le filtre anti-*wobble* (24) est un filtre numérique apte à générer, pour une image donnée, un filtre de Butterworth passe-bas dont l'ordre est prédéfini et dont la fréquence de coupure ($F_c$) varie en fonction du temps d'exposition ($t_{exp}$) déterminé pour ladite image donnée.

5. L'appareil mobile de la revendication 4, dans lequel la loi de variation de la fréquence de coupure $F_c$ du filtre de Butterworth en fonction du temps d'exposition $t_{exp}$ est une loi du type $F_c = 1 / 2.t_{exp}$.

6. L'appareil mobile de la revendication 4, dans lequel le filtre numérique est appliqué au signal gyrométrique deux fois, dans le sens direct et dans le sens retour.

7. L'appareil mobile de la revendication 1, dans lequel la caméra est apte à délivrer en sortie les données video pendant la durée d'une fenêtre d'acquisition (A), et dans lequel il est prévu des moyens aptes à appliquer le filtre anti-*wobble* pour une image donnée pendant la durée d'une fenêtre de traitement (P, A, P') débutant avant la fenêtre d'acquisition de cette image.

8. L'appareil mobile de la revendication 7, dans lequel lesdits moyens sont aptes à appliquer le filtre anti-*wobble* pendant la durée de ladite fenêtre de traitement (P, A, P') se terminant après la fenêtre d'acquisition de l'image.

**Patentansprüche**

1. Bewegliche Vorrichtung, insbesondere ein motorisierter Flugkörper wie etwa eine Drohne, die Folgendes umfasst:

- eine Kamera (10), die ein Objektiv, einen digitalen Sensor, auf dem ein Bild einer Szene während einer gegebenen Belichtungszeit ($t_{exp}$) erzeugt wird, und einen Mechanismus zum Lesen des Sensors des "Rolling Shutter"-Typs, der am Ausgang zeilenweise Videodaten ($S_{cam}$) liefert, enthält;
- eine Belichtungssteuerschaltung (22), die eine Regelung aufweist, die die Belichtungszeit ($t_{exp}$) als Funktion des Beleuchtungsniveaus der erfassten Szene dynamisch einstellen kann;
- eine Gyrometerzentrale (12), die ein gyrometrisches Signal ($S_{gyro}$) liefern kann, das momentane Veränderung der Lage ($\varphi$, $\theta$, $\psi$) der beweglichen Vorrichtung repräsentiert; und
- eine Bildverarbeitungsschaltung (18), die ein Antiwobbel-Filter (24) aufweist, das am Eingang die Videodaten ($S_{cam}$) und das gyrometrische Signal ($S_{gyro}$) empfängt und am Ausgang Videodaten liefert, die bearbeitet und auf Artefakte, die durch Eigenschwingungen der beweglichen Vorrichtung eingeführt werden, korrigiert sind,

**dadurch gekennzeichnet, dass** das Antiwobbel-Filter (24) die Verstärkung des gyrometrischen Signals, das in den Eingang der Bildverarbeitungsschaltung eingegeben wird, als Funktion der durch die Belichtungssteuerschaltung bestimmten Belichtungszeit ($t_{exp}$) dynamisch modifizieren kann, derart, dass die Verstärkung des Filters verringert wird, wenn die Belichtungszeit zunimmt, und umgekehrt.

2. Bewegliche Vorrichtung nach Anspruch 1, wobei das Veränderungsgesetz für die Verstärkung des Filters ein Gesetz mit monotoner Veränderung ist.

3. Bewegliche Vorrichtung nach Anspruch 2, wobei das Veränderungsgesetz für die Verstärkung des Filters ein Gesetz für eine Veränderung, die zwischen einer maximalen Verstärkung von eins und einer minimalen Verstärkung von null begrenzt ist, ist.

4. Bewegliche Vorrichtung nach Anspruch 2, wobei das Antiwobbel-Filter (24) ein digitales Filter ist, das für ein gegebenes Bild ein Tiefpass-Butterworth-Filter erzeugen kann, dessen Ordnung im Voraus definiert ist und dessen Kappungsfrequenz ($F_c$) sich als Funktion der für das gegebene Bild bestimmten Belichtungszeit ($t_{exp}$) verändert.

5. Bewegliche Vorrichtung nach Anspruch 4, wobei das Veränderungsgesetz für die Kappungsfrequenz $F_c$ des Butterworth-Filters als Funktion der Belichtungszeit $t_{exp}$ ein Gesetz des Typs $F_c = 1/2. t_{exp}$ ist.

6. Bewegliche Vorrichtung nach Anspruch 4, wobei das digitale Filter auf das gyrometrische Signal zweimal angewendet wird, einmal in direkter Richtung und einmal in Gegenrichtung.

7. Bewegliche Vorrichtung nach Anspruch 1, wobei die Kamera am Ausgang Videodaten während der Dauer eines Erfassungsfensters (A) liefern kann, und wobei Mittel vorgesehen sind, die das Antiwobbel-Filter auf ein gegebenes Bild während der Dauer eines Bearbeitungsfensters (P, A, P'), das vor dem Erfassungsfenster dieses Bildes beginnt, anwenden können.

8. Bewegliche Vorrichtung nach Anspruch 7, wobei die Mittel das Antiwobbel-Filter während der Dauer des Bearbeitungsfensters (P, A, P'), das nach dem Erfassungsfenster des Bildes endet, anwenden können.


**Claims**

1. A mobile device, in particular a motorized flying vehicle such as a drone, including:

    - a camera (10) comprising a lens, a digital sensor on which is formed an image of a scene for a given time of exposure ($t_{exp}$), and a sensor reading mechanism of the *rolling shutter* type delivering as an output, line by line, video data ($S_{cam}$);
    - an exposure control circuit (22), comprising a feedback control adapted to adjust dynamically the time of exposure ($t_{exp}$) as a function of the level of lighting of the captured scene;
    - a gyrometric unit (12), adapted to deliver a gyrometric signal ($S_{gyro}$) representative of the instantaneous variations of the attitude ($\varphi$, $\theta$, $\psi$) of the mobile device; and
    - an image processing circuit (18), comprising an anti-wobble filter (24), receiving as an input the video data ($S_{cam}$) and the gyrometric signal ($S_{gyro}$), and delivering as an output video data processed and corrected from artefacts introduced by vibrations peculiar to the mobile device,

    **characterized in that** the anti-wobble filter (24) is adapted to modify dynamically the gain of the gyrometric signal applied at the input of the image processing circuit as a function of the time of exposure ($t_{exp}$) determined by the exposure control circuit, so as to reduce the gain of the filter when the time of exposure increases, and *vice versa.*

2. The mobile device of claim 1, wherein the gain variation law of the filter is a monotonous variation law.

3. The mobile device of claim 2, wherein the gain variation law of the filter is a variation law limited between a unit maximum gain and a null minimum gain.

4. The mobile device of claim 2, wherein the anti-wobble filter (24) is a digital filter adapted to generate, for a given image, a Butterworth low-pass filter whose order is preset and whose cut frequency ($F_c$) varies as a function of the time of exposure ($t_{exp}$) determined for said given image.

5. The mobile device of claim 4, wherein the law of variation of the cut frequency $F_c$ of the Butterworth filter as a function of the time of exposure $t_{exp}$ is a law of the type $F_c = 1/2 . t_{exp}$.

6. The mobile device of claim 4, wherein the digital filter is applied twice to the gyrometric signal, in the forward direction and in the return direction.

7. The mobile device of claim 1, wherein the camera is adapted to deliver as an output the video data for the duration of an acquisition window (A), and wherein means are provided, which are adapted to apply the anti-wobble filter for a given image for the duration of a processing window (P, A, P') starting after the window of acquisition of the image.

8. The mobile device of claim 7, wherein said means are adapted to apply the anti-wobble filter for the duration of said processing window (P, A, P') ending after the window of acquisition of the image.

Fig. 1

Fig. 2

Fig. 3

Fig. 4

Fig. 5

fenêtre acq. données gyro

commande de l'acquisition du signal image

fenêtre acq.
données image

A

P

A

P

A

P'

P'

A

$S_{gyro}$ (brut)

$S_{gyro}$ (filtré)

t

## Fig. 6

fenêtre acq. données gyro

Commande de
l'acquisition du
signal image

fenêtre acq.
données image

$S_{gyro}$ (brut)

A

A

A

$S_{gyro}$
(filtré)

P'

P

P'

P

t

## Fig. 7

**EP 3 007 429 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- EP 2364757 A1
- EP 2613214 A1
- FR 1456302
- US 20120242847 A1
- WO 2011058255 A1
- FR 1456302 A